**Europäisches Patentamt**

(19) **European Patent Office**

**Office européen des brevets**

(11) Publication number: **0 063 179**

**A2**

(12) # EUROPEAN PATENT APPLICATION

(21) Application number: **81109379.8**

(22) Date of filing: **30.10.81**

(51) Int. Cl.³: **A 63 C 5/00**
**B 62 B 13/00**

(30) Priority: **21.04.81 IT 951081 U**

(43) Date of publication of application:
**27.10.82 Bulletin 82/43**

(84) Designated Contracting States:
**AT BE CH DE FR GB IT LI LU NL SE**

(71) Applicant: **Zuanetti, Giulio**
**Via Alfieri, 6**
**I-22072 Cermenate(IT)**

(72) Inventor: **Zuanetti, Giulio**
**Via Alfieri, 6**
**I-22072 Cermenate(IT)**

(74) Representative: **Riccardi, Sergio**
**Riccardi & Co. Via Macedonio Melloni, 32**
**I-20129 Milano(IT)**

(54) **Snow Board.**

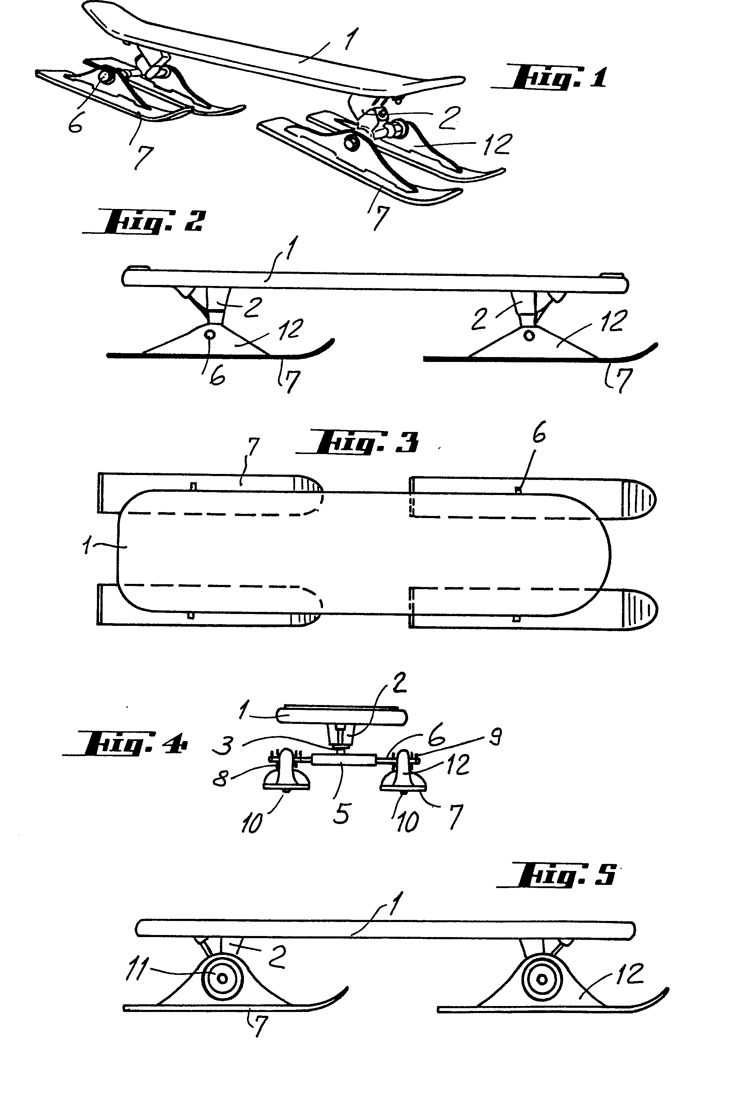

(57) The invention relates to a snow board, consisting of the combination of a skate board (1) with four short skis (7) applied at the place of the wheels, allowing to effect on the snow all the evolutions which are possible to be done with a skate board by displacing the pressure of the feet on the board and the relevant balancing of the body (Fig. 1).

Fig. 1

EP 0 063 179 A2

Croydon Printing Company Ltd.

- 1 -

"SNOW BOARD"

The present invention relates to a snow board giving new possibilities of entertainment and sport contests, without requiring expensive equipment and special clothing.

It is known that means are available to glide on the snow, consisting of a sort of sled, provided with skis or skates and a steering wheel or stick acting on the front skis or skates, on which a person is sitting, but such a means does not require any physical exercise and moreover gives a limited possibility to effect evolutions.

The object of the present invention is to provide a new means for gliding on the snow, allowing to effect on it all the evolutions which can be done on the road or rink with the skate board, and this is practically carried out through the combination of the structure of the skate board with that of ski.

The snow board according the present invention allows the glide on the snow in the erect position on a single board and to follow the turns by a rotation of the skis caused by displacing pressure of feet and by the relevant balancing of the body, in a similar way as the skate board is manoeuvred.

It is also possible to use the snow board according to the present invention in a sitting or laying position, in which case the board will be obviously of a greater length proportioned to the height of the person using the board.

The snow board according to the present invention is characterized by the fact of consisting in the combination of a skate board with four short skis provided with a particular vertical support member and applied at the place of the wheels.

These and other features of the board according to the present invention will be more apparent and clear from the following detailed description of two embodiments thereof, given as a non limiting example only, and with reference to the figure of the accompanying drawing, in which:

Fig. 1 is a perspective view of the snow board;

Fig. 2 is a side view of the board;

Fig. 3 is a top view of said board;

Fig. 4 is an end view of the same board; and

Fig. 5 is a side view of a modification of the snow board.

With reference now to the figures of the accompanying drawing, the new means comprises a board 1 made of wood, plastics, metal and like materials, suitably shaped, possibly inclined upwardly at both ends, and provided with recesses or roughened areas, even by applying self-sticking strips, so as to improve adhesion of feet to the board, under which are fixed the supports 2 of the articulations 3 made of metal or plastics, with a rubber pad 4 allowing rocking of axis 5, on the side pins 6 of which the four skis 7 are placed and provided with a vertical member 12 acting as a supporting shoe, by which skis 7 are applied on side pins 6, through any fastening means, such as washers 8 and split pins 9; said skis 7 may have lower ribs 10 and be made of metal, plastics, wood or any other material or combination of materials.

Thus skis 7 may swing and according to the point on which the pressure of feet on the board 1 is made, it is possible to effect on the snow all the possible evolutions. The board may also be provided with many accessories of any kind, such as a strap to avoid that the board slips downhill in case of a fall.

It is to be pointed out that skis 7 may be applied, with any suitable means, e.g. with a snap-on or tight fit system, directly to the wheels 11 of the conventional skate boards existing on the market (which in this way may also be used as such in the period of the year when there is no snow), always remaining with in the scope of the present invention, the main feature of which being that of combining a skate board with skis.

It is therefore to be understood that many modifications, variations, additions or substitutions of elements may be made to the snow board according to the present invention, without departing however from its spirit and object nor from its scope of protection, as it is also defined in the appended claims.

0063179

CLAIMS

1) Snow board, characterized in that it consists of the combination of a skate board (1) with four short skis (7) applied at the place of the wheels by means of a member (12) vertically extending from each ski (7) and acting as a supporting shoe.

2) Snow board, according to Claim 1, characterized by that each ski (7) is applied in place of a wheel, fixing it through the vertical member (12) in a rocking way to the lateral pins (6) of the swinging articulation (3) of the board (1).

3) Snow board, according to Claim 1, characterized by that each ski (7) is directly applied to a wheel (11) of a conventional skate board.

4) Snow board, according to one or more of the preceding claims, characterized in that the skis (7) are provided with lower ribs (10) and are made of metal, plastics, wood or any other material or combination of materials.

5) Snow board, according to one or more of the preceding claims, characterized in that it has recesses or roughened areas, e.g. by applying self-sticking strips, so as to improve adhesion of feet to the board.

Fig. 1

Fig. 2

Fig. 3

Fig. 4

Fig. 5